## Europäisches Patentamt

## European Patent Office

## Office européen des brevets

(19)

(11) Veröffentlichungsnummer: **0 083 030**
**B1**

(12)

# EUROPÄISCHE PATENTSCHRIFT

(45) Veröffentlichungstag der Patentschrift:
04.06.86

(51) Int. Cl.⁴: **B 29 C 65/02**

(21) Anmeldenummer: **82111656.3**

(22) Anmeldetag: **15.12.82**

(54) Verfahren zur Herstellung einer gasdicht verschlossenen Hohlkammerplatte aus Kunststoff.

(30) Priorität: **28.12.81 DE 8137938 U**

(43) Veröffentlichungstag der Anmeldung:
**06.07.83 Patentblatt 83/27**

(45) Bekanntmachung des Hinweises auf die Patenterteilung:
**04.06.86 Patentblatt 86/23**

(84) Benannte Vertragsstaaten:
**AT BE CH DE FR GB IT LI NL SE**

(56) Entgegenhaltungen:
**AT - B - 244 050
DE - A - 2 536 462
US - A - 4 100 239
US - A - 4 172 749**

(73) Patentinhaber: **Röhm GmbH, Kirschenallee
Postfach 4242, D-6100 Darmstadt 1 (DE)**

(72) Erfinder: **Kolbe, Klaus, Dr., Taubenstrasse 16,
D-6107 Reinheim 1 (DE)**
Erfinder: **Hellmann, Walter, Hauptstrasse 73,
D-6101 Rossdorf 1 (DE)**
Erfinder: **Krajec, Otmar, Auf der Fuchsenhütte 38,
D-6101 Rossdorf 1 (DE)**
Erfinder: **Schikowsky, Hartmut, Karlstrasse 1,
D-6100 Darmstadt (DE)**
Erfinder: **Vetter, Heinz, Dr.-Ing., Taunusstrasse 92,
D-6101 Rossdorf 1 (DE)**

## Beschreibung

Gebiet der Erfindung

Die Erfindung betrifft ein Verfahren zur Herstellung einer gasdicht verschlossenen Hohlkammerplatte aus extrudiertem Kunststoff, ausgehend von einer einstückig extrudierten Hohlprofilplatte, bestehend aus zwei im wesentlichen ebenen, parallelen Aussenwänden und dazwischen angeordneten Stegen, die eine Mehrzahl von zwischen den Aussenwänden und den Stegen eingeschlossenen Hohlkammern enthält, durch Erwärmen der Hohlkammerplatte wenigstens in Teilbereichen auf Verformungstemperatur und Verschliessen der Hohlkammern in dem erwärmten Bereich. Die Aussenwände und Stege sind einstückig aus thermoplastischem, vorzugsweise lichtdurchlässigem, insbesondere glasklarem Kunststoff extrudiert. Die Stege können schrägwinklig zu den Aussenwänden verlaufen, sind aber vorzugsweise senkrecht dazu angeordnet. Weiterhin können die Stege im Innern der Hohlkammerplatte durch zusätzliche, vorzugsweise parallel zu den Aussenwänden angeordnete Zwischenwände untereinander verbunden sein.

Einstückig extrudierte Hohlkammerplatten werden in grossem Umfang zur Verglasung von Gewächshäusern, Schwimmhallen, Werkhallen usw. eingesetzt. Die zur Herstellung solcher Verglasungen verwendeten Hohlkammerplatten haben offene Stirnseiten, so dass die Hohlräume mit der Atmosphäre in Verbindung stehen. In der Regel werden sie so eingebaut, dass die Hohlräume gegen Staub, Schmutz, Wasser oder Insekten weitgehend verschlossen sind, jedoch sind sie auch dann nicht gegen die Atmosphäre abgedichtet. Die Stirnseiten können z.B. in ein Rahmenprofil eingesetzt sein oder mit einer U-Profilleiste verschlossen sein.

Beim Einsatz der Hohlkammerplatten hat es sich bald gezeigt, dass Kondenswasser, das sich in den Hohlkammern abscheidet, ein Problem darstellt. Wenn das Wasser nicht abfliessen kann, sammelt es sich im Lauf der Zeit in solchen Mengen an, dass es einen nicht unbeträchtlichen Teil der Hohlkammern füllt. Die Bildung von Kondenswasser wurde darauf zurückgeführt, dass die zur Herstellung der Hohlkammerplatten verwendeten Kunststoffe, vorwiegend Polymethylmethacrylat (PMMA), geringe Mengen, bei mittlerer Luftfeuchtigkeit etwa 0,5 bis 1%, Wasser aufnehmen können. Durch Diffusion tritt auch in das Innere der Hohlkammern Wasserdampf ein, der namentlich dann, wenn die eine Aussenwand kühler als die andere ist, zur Abscheidung von Kondenswasser führen kann.

Die Erfindung betrifft Hohlkammerplatten der erwähnten Art, die im wesentlichen frei von Kondenswasseransammlungen bleiben.

Stand der Technik

Aus der US-A 4 100 239 ist ein Verfahren zur Herstellung einer gasdicht verschlossenen Hohlkammerplatte aus extrudiertem thermoplastischem Kunststoff bekannt, bei dem eine Hohlprofilplatte, bestehend aus zwei im wesentlichen ebenen, parallelen Aussenwänden und dazwischen angeordneten Stegen, die eine Mehrzahl von zwischen den Aussenwänden und den Stegen eingeschlossenen Hohlkammern enthält, einstückig extrudiert wird. Die Hohlkammern werden in regelmässigen Abständen gasdicht verschlossen, indem sie in Teilbereichen auf Verformungstemperatur erwärmt und durch Zusammenpressen zweier quer über die Hohlkammerplatte verlaufender Pressbacken zusammengedrückt und getrennt und danach abgekühlt werden.

Gemäss DE-OS 2 802 179 wird eine Hohlkammerplatte praktisch luftdicht verschlossen, indem sie auf Verformungstemperatur erwärmt und dann in einer entsprechenden Pressvorrichtung im Randbereich in der Weise verformt wird, dass die beiden Deckplatten zu einem flanschartigen Einfassrand zusammengedrückt sind. Diese Art des Verschlusses unterbindet den freien Luftaustausch zwischen den Hohlkammern und der umgebenden Atmosphäre, ist jedoch nicht in dem Sinne gasdicht, dass bei einem Druckunterschied zwischen den Hohlkammern und der Atmosphäre jeglicher Gasdurchtritt verhindert würde. Bei der Verformung der Deckplatten zu einem flanschartigen Einfassrand werden zwar die beiden Deckplatten in innige Berührung gebracht, aber nicht miteinander verschmolzen. Die Berührungsstelle ist nicht vollständig gasdicht und lässt einen Druckausgleich bei gelegentlich auftretenden Druckunterschieden zwischen den Hohlkammern und der Atmosphäre zu. Die Möglichkeit des Gasdurchtrittes nimmt weiterhin zu, wenn es – was der Regelfall ist – infolge der Verformung des Plattenrandes nach dem Abkühlen zu Spannungsrissen kommt. Auch durch diese Risse kann Gas hindurchtreten.

Aufgabe und Lösung

Der Schutz von Hohlkammerplatten gegen die Bildung und Ansammlung von Kondenswasser, sowie gegen das Eindringen von Staub und Schmutz soll verbessert werden.

Die Lösung der Aufgabe geht von dem eingangs erwähnten Verfahren aus und ist erfindungsgemäss dadurch gekennzeichnet, dass die Hohlkammerplatte wenigstens in dem zu dem herzustellenden Verschluss verwendeten Bereich über die Verformungstemperatur hinaus bis zum thermoplastischen Zustand erwärmt wird, dass in dem thermoplastischen Bereich der Hohlkammerplatte beide Aussenwände miteinander oder mit einem die Stirnseiten überdeckenden Band aus thermoplastischem Kunststoff gasdicht verschweisst werden, und dass der im thermoplastischen Zustand erzeugte Verschluss noch wenigstens 1 min auf einer Temperatur im Bereich von 10°C unter bis 20°C über der Vicat-Erweichungstemperatur des Kunststoffmaterials der Hohlkammerplatte gehalten wird.

Die Lösung der Aufgabe ist erst durch neue Erkenntnisse über die Kondenswasserbildung möglich geworden. Durch neuere Untersuchungen ist festgestellt worden, dass die Wasseraufnahmefähigkeit von Kunststoffen, insbesondere PMMA, bzw. die Diffusion von Wasserdampf entgegen der bisher geltenden Annahme nicht die entscheidende Ursache für die Kondenswasserbildung ist. Der Transport von Wasser allein infolge von Diffusion durch die Kunststoffwände der Hohlkammerplatte führt unter den üblichen Anwendungsbedingungen nicht zu einer störenden Kondenswasseransammlung, solange keine extremen Bedingungen herrschen. Im allgemeinen entweicht das gegebenenfalls eindiffundierte Wasser bald wieder. Als überwiegende Ursache für die Bildung und Ansammlung von Kondenswasser wurde ein Effekt erkannt, der sich als «Atmung» bezeichnen lässt. Wenn die Hohlkammern eine – wenn auch eventuell kleine – Öffnung zur Atmosphäre haben, wird bei jeder Druckdifferenz zwischen dem Gasraum der Hohlkammern und der Atmosphäre Luft in die Hohlkammern eingezogen oder herausgeblasen. Der Druckunterschied kann auf den täglichen Schwankungen des atmosphärischen Luftdruckes oder auf Temperaturschwankungen der Luft in den Hohlkammern beruhen. Mit der eingesaugten Luft kann unmittelbar eine der jeweiligen Luftfeuchtigkeit entsprechende Wasserdampfmenge in die Hohlkammern eingebracht werden, die leicht zu einer erheblichen Kondenswasserbildung führt. Zusammen mit der Luft wird feinster Staub eingesaugt, der sich ebenfalls mit dem Kondenswasser an den Kunststoffwänden niederschlagen kann und mit der Zeit zu einer störenden Verschmutzung führt. Daher sind die durch das Kondenswasser verursachten Probleme allein durch eine Wasserabzugsöffnung nicht zu beseitigen.

Die neue Erkenntnis, auf der die Erfindung beruht, besteht darin, dass eine störende Kondenswasseransammlung und das Einziehen von Feinstaub nicht auftreten, wenn das «Atmen» der Hohlkammern unterbunden wird. Dies geschieht erfindungsgemäss durch den völligen Verzicht auf die bisher als unerlässlich geltenden Kondenswasserabzugsöffnungen und durch einen gasdichten Verschluss der Hohlkammern gegenüber der Atmosphäre. Die Hohlkammern brauchen jedoch untereinander nicht gasdicht verschlossen zu sein. Die Hohlkammern sind im Sinne der Erfindung gasdicht, wenn sie keine freie Öffnung zur Atmosphäre haben. Eine gewisse Gasdurchlässigkeit durch Diffusion bleibt ausser Betracht. Es versteht sich von selbst, dass die Hohlkammern dann auch wasser- und staubdicht sind.

Gewerbliche Anwendbarkeit

Die erfindungsgemäss hergestellten Hohlkammerplatten eignen sich für alle Anwendungszwecke, für die man bisher Hohlkammerplatten mit offenen bzw. nicht gasdicht verschlossenen Hohlkammern eingesetzt hat. Der Ausschluss von Staub ist ein Vorteil, der selbst bei Innenanwendungen oder Anwendung in einer vollständig trockenen Umgebung zur Wirkung kommt. Die verminderte Kondenswasserbildung und die Vermeidung einer Ansammlung von schmutzhaltigem Kondenswasser ist bei allen Anwendungen vorteilhaft, in denen die Hohlkammerplatten Räume von unterschiedlicher Temperatur und/oder Feuchtigkeit trennt.

Die Hohlkammerplatten eignen sich daher als Bedachungs-, Verglasungs- und Wandungsmaterial für Gewächshäuser, Schwimmhallen, Turnhallen, Werkstätten, Bahnhofshallen, Lagerhäuser usw.

Ausführungsformen der Erfindung

Man kann beim Verfahren der Erfindung von Hohlprofilplatten mit offenen Stirnseiten ausgehen und diese an beiden Seiten einzeln verschliessen. Vorzugsweise wird das Verschliessen der Hohlkammern unmittelbar nach der Extrusion mit der Zerlegung des kontinuierlich extrudierten Hohlstranges zu einzelnen Platten zusammengefasst. Dabei wird der Strang geteilt und die beiden entstehenden Enden im gleichen Arbeitsgang gasdicht verschlossen.

a. Figuren

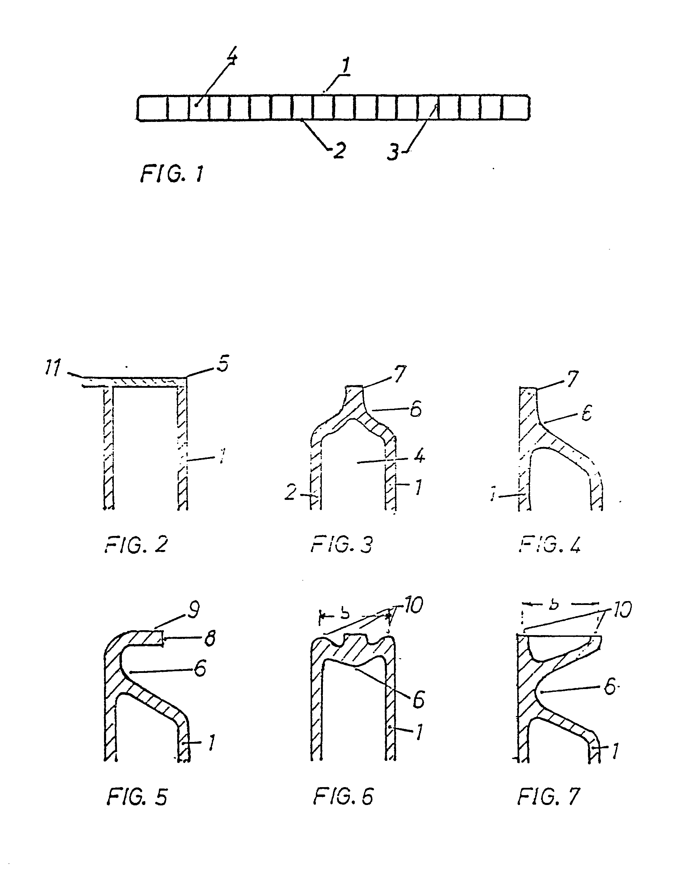

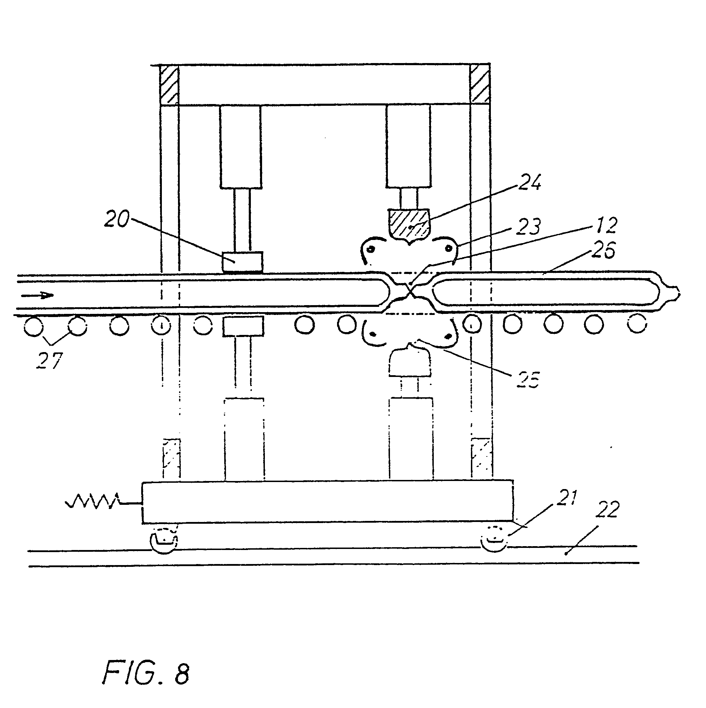

Figur 1 stellt eine Draufsicht auf die unverschlossene Stirnseite einer typischen Hohlkammerplatte dar, die erfindungsgemäss zu verschliessen ist. Typische Platten dieser Art sind 3 bis 60 mm, vorzugsweise 10 bis 20 mm dick und haben Aussenwände von 0,5 bis 3 mm Dicke. Die Hohlkammern (4) haben meistens rechteckigen Querschnitt. Bei typischen Plattenbreiten von 1000 bis 2000 mm enthält eine Hohlkammer 20 bis 100 nebeneinanderliegende Hohlkammern. Die Figuren 2 bis 7 zeigen Längsschnitte durch verschiedene Ausführungsformen der verschlossenen Stirnseiten der Hohlkammerplatten parallel zu den (nicht dargestellten) Stegen. Figur 8 zeigt eine Vorrichtung zur Durchführung des Verfahrens der Erfindung im Schnittbild.

b. Nachträgliches Verschliessen der offenen Stirnseiten

Eine vorgefertigte Kunststoffschicht (5) gemäss Figur 2 wird an beiden Stirnseiten auf die offenen Enden der Hohlkammern (4) aufgeschweisst. Die Verbindung kann dadurch hergestellt werden, dass ein Kunststoffband (5) – vorzugsweise aus dem gleichen Kunststoff wie die Platte – und die Stirnseite der Platte bis zum thermoplastischen Zustand erwärmt und unter Druck zusammengefügt werden. Ein seitlicher Überstand (11) kann als Abtropfkante dienen.

Noch einfacher und zweckmässiger ist es, einen etwa 10 bis 20 mm breiten Bereich entlang der Stirnseite bis zum thermoplastischen Zustand zu erhitzen und mittels Pressbacken die Aussenwände (1, 2) zusammenzupressen und miteinander zu verschmelzen. Die Stege (3) werden dabei zusammengestaucht und verschmelzen mit dem Material der Aussenwände (1, 2). Auf diese Weise lassen sich Abschlussformen wie in Figur 3 bis 7 erreichen. Die Schweissnaht (6) kann sich – wie bei Figur 3 – in der Mittelebene der Platte oder seitlich befinden, z.B. bei Figur 4 in der Ebene der Aussenwand (1). Für die Montage kann es vorteilhaft sein, wenn der durch Zusammenschweissen erzeugte Verschluss (6) eine zu den Aussenwänden parallele Fläche (7) aufweist, die sich durch entsprechend geformte Schweissbacken unschwer erzeugen lässt.

Solange die Schweissnaht gemäss Figur 3 noch thermisch formbar ist, kann sie gemäss Figur 6 mit einem heissen Presswerkzeug in Richtung der Platte gestaucht werden, um eine verbreiterte Auflagefläche zu schaffen.

Eine verbreiterte Auflagefläche bzw. Kantenfläche ist von Vorteil, wenn beträchtliche Kräfte, z.B. das Eigengewicht eines hohen, senkrecht stehenden Plattenabschnittes, darauf einwirken. Es ist vorteilhaft, wenn die Auflagefläche (9), die senkrecht zur Fläche der Aussenwände (1, 2) verläuft, eine Breite b von wenigstens der Hälfte der Plattendicke hat. Dies wird gemäss Figur 5 durch einen entsprechend geformten Rand (8) erreicht. Dieser Rand lässt sich durch thermoplastische Verformung des zusammengepressten Plattenrandes zwischen zwei entsprechend geformten Presswerkzeugen herstellen. Ausserdem erfüllt diese Randgestaltung den Zweck einer Abtropfkante bei der Anwendung als Bedachungsmaterial.

Anstelle einer durchgehenden Auflagefläche, wie in den Figuren 2 und 5, kann eine bessere Kraftverteilung auch durch mehrere, in einer Ebene senkrecht zur Fläche der Aussenwände angeordnete Kanten (10) erreicht werden, die vorzugsweise in einem Abstand b von wenigstens der halben Plattendicke auseinanderliegen. Das wird neben einer Gestaltung wie in Figur 6 auch bei der Gestaltung gemäss Figur 7 erreicht, wo die Verschweissung nicht an der äussersten Plattenkante, sondern im randnahen Bereich erfolgte, so dass an der Aussenkante das ursprüngliche Profil noch erhalten ist.

Bei den verschweissenden Verschlussverfahren werden die Hohlkammern zu einem Zeitpunkt verschlossen, an dem die Hohlkammerplatte wenigstens in dem Bereich, der zur Bildung des Verschlusses herangezogen und dabei verformt wird, thermoplastisch ist. Die beiden Aussenwände (1, 2) werden entweder miteinander oder mit einem die Stirnseiten überdeckenden Band aus Kunststoff, das sich ebenfalls im thermoplastischen Zustand befindet, gasdicht verschweisst. Das Kunststoffmaterial ist in diesem Sinne als thermoplastisch anzusehen, wenn die in Berührung gebrachten Kunststoffteile unter Druck zu einer durchgehenden, haftenden Verbindung verschweissen. Das ist im allgemeinen daran zu erkennen, dass an der Grenzfläche keine Lichtreflexionen mehr auftreten.

Die Verschweissung mittels Pressbacken, die die Aussenwände einschliesslich der dazwischenliegenden Stege zusammenpressen oder ein Band auf die Stirnseite aufpressen, kann zu Spannungen in dem Kunststoffmaterial führen, insbesondere bei verhältnismässig dickwandigen Teilen aus begrenzt schlagzähen Kunststoffen, wie PMMA. Es wurde festgestellt, dass infolge derartiger Spannungen Risse entstehen können, welche den gasdichten Verschluss aufheben und die nachteiligen Folgen des «Atmens» auftreten lassen. Gemäss einer bevorzugten Ausführungsform der Erfindung werden diese Nachteile dadurch vermieden, dass man den im thermoplastischen Zustand erzeugten Verschluss (6) und den daran angrenzenden Plattenbereich noch wenigstens 1 min, vorzugsweise 5 bis 15 min, auf einer Temperatur hält, die im Bereich von 10° unterhalb bis 20° oberhalb der Vicat-Erweichungstemperatur des Kunststoffmaterials der Hohlkammerplatte liegt. Die Dauer der Erwärmung kann um so kürzer bemessen werden, je höher die Temperatur liegt.

An der Obergrenze des Temperaturbereichs genügen 1 bis 2 min, während an der Untergrenze des Temperaturbereichs 15 min oder länger erforderlich sind. Wenn Deformationen zu befürchten sind, sollte die Vicat-Erweichungstemperatur nicht um mehr als 10° bis 12° überschritten werden. Für PMMA liegt der günstigste Temperaturbereich für die Nacherhitzung zwischen 110 und 130°C, wobei die Dauer der Erhitzung zwischen 5 und 15 min liegen kann. Bei 120°C ist eine Behandlungsdauer von 10 min günstig.

c. Verschliessen der Hohlkammern beim Extrusionsverfahren

Das Verschliessen der Hohlkammern kann mit dem Extrusionsverfahren zur kontinuierlichen Herstellung eines Hohlprofilstranges in der Weise zusammengefasst werden, dass von dem kontinuierlich erzeugten Hohlprofilstrang Stücke von gewünschter Länge abgetrennt und die entstehenden Stirnseiten beidseitig der Trennstelle im gleichen Arbeitsgang verschlossen werden. Dies geschieht zweckmässigerweise an einer Stelle der Extrusionsvorrichtung, an der der Strang schon unter die Erweichungstemperatur abgekühlt ist. Da der kontinuierlich vorrückende Strang an seinem vorderen Ende verschlossen ist, müssen die Hohlkammern während der Extrusion durch Leitungen, die durch die die Hohlkammern formenden Dorne der Extrusionsdüse führen, mit Luft oder einem anderen inerten Gas gefüllt werden. Dieses Gas kann mit einem geringen Überdruck eingeleitet werden, um den Hohlstrang im plastischen Zustand zu stützen. Man kann in diesem Falle ohne Vakuum im Formkanal arbeiten. Da das Trennen und Verschliessen des Stranges eine gewisse Zeit in Anspruch nimmt, während der der Strang weiter vorrückt, wird die – vorzugsweise vollautomatisch arbeitende – Trenn- und Verschliessvorrichtung an einem Führungselement längs des Stranges mit der Extrusionsgeschwindigkeit mitgeführt und nach Abschluss des Arbeitsganges an die nächstfolgende Trennstelle des Stranges zurückgeführt.

Die Trenn- und Verschliessvorrichtung kann z.B. aus einer Säge, einer Heizvorrichtung und einer Pressvorrichtung bestehen. Die Säge trennt durch einen quer zur Extrusionsvorrichtung verlaufenden Schnitt ein Stück von gewünschter Länge von dem Hohlstrang ab. Mit der Heizvorrichtung werden die beiden entstandenen Schnittflächen sowie zwei zum Verschliessen der Stirnseiten geeignete Kunststoffbänder bis zum thermoplastischen Zustand erwärmt und mittels der Pressvorrichtung jeweils eines der Bänder auf die Stirnseiten aufgeschweisst.

Eine andere Verschliessvorrichtung ist in Figur 8 dargestellt. Sie klemmt sich mit den hydraulisch angetriebenen Backen (20) an dem Hohlstrang, der sich auf einer Rollenbahn (27) kontinuierlich in Pfeilrichtung bewegt, fest und wird durch diesen mittels der Rollen (21) an den Schienen (22) mitbewegt. Wärmestrahler (23) heizen das zu verformende Stück des Hohlstranges bis zum thermoplastischen Zustand auf. Sobald dieser erreicht ist, werden die beheizten Trenn- und Schweissbacken (24) hydraulisch ausgefahren, bis die Schneiden (25) in der Strangmitte in Berührung kommen. Nach dem Zurückfahren der Backen (24) können die Strahler (23) mit verminderter Leistung weiterbrennen, um die Schweissstellen zum Ausgleich von inneren Spannungen nachzuerhitzen. Danach werden die abgetrennte, gasdicht verschlossene Hohlkammerplatte (26) abgenommen, die Klemmbakken (20) gelöst und die Verschliessvorrichtung auf den Schienen (22) zur nächsten Trennstelle zurückgefahren.

Wenn die zum Spannungsabbau erforderliche Nacherhitzungszeit länger als die Taktzeit ist, in der die jeweils gewünschte Plattenlänge extrudiert wird, muss die Nacherhitzung mit einer gesonderten Vorrichtung durchgeführt werden. Geeignet ist z.B. ein beheizter Wärmetunnel von ausreichender Länge, worin die ganze Platte nacherhitzt wird. Man kann auch an den Verschlussstellen (6) einzelne Wärmestrahler mit dem Strangende und den abgetrennten Platten mitführen, wobei mehrere Wärmestrahler auf Schienen fahrbar oder an Ketten hängend längs der Extrusionsbahn angeordnet sind. Die Strahler können in festen, der Plattenlänge entsprechenden Abständen miteinander verbunden sein und nach jeweils einer Taktzeit um eine Plattenlänge zurückversetzt werden.

Andere Randformen gemäss Figuren 4 bis 7 können kontinuierlich mit entsprechend geformten Schweiss- und Trennbacken erzeugt werden. Zur Erzeugung einer Randform entsprechend Figur 4 genügt eine einseitig gegen eine feststehende, vorzugsweise beheizte Unterlage wirkende Schweissbacke. Eine Randform entsprechend Figur 7 ist mit einem Werkzeug mit zwei parallelen Schweissbacken, jedoch ohne Schneide (25) herstellbar. Zwischen den beiden Schweissbakken entsteht ein Wulst mit kurzen geschlossenen Kammern. Dieser Wulst wird nach dem Nacherhitzen und Erkalten mit einer Säge durchtrennt. Die Randform gemäss Figur 5 ist aus einem Rand nach Figur 4 mit entsprechend langer Fläche (7) herstellbar, indem durch ein zusätzliches Werkzeug die Fläche (7) noch im erweichten Zustand zu der Tropfkante (8) umgebogen wird. Durch Stauchung im erweichten Zustand lässt sich die Randform gemäss Figur 6 aus der Randform gemäss Figur 3 erzeugen, wozu ebenfalls ein zusätzliches Werkzeug erforderlich ist.

## Patentansprüche

1. Verfahren zur Herstellung einer gasdicht verschlossenen Hohlkammerplatte aus extrudiertem Kunststoff, ausgehend von einer einstückig extrudierten Hohlprofilplatte, bestehend aus zwei im wesentlichen ebenen, parallelen Aussenwänden und dazwischen angeordneten Stegen, die eine Mehrzahl von zwischen den Aussenwänden und den Stegen eingeschlossenen Hohlkammern enthält, durch Erwärmen der Hohlkammerplatte wenigstens in Teilbereichen auf Verformungstemperatur und Verschliessen der Hohlkammern in dem erwärmten Bereich, dadurch gekennzeichnet, dass die Hohlkammerplatte wenigstens in dem zu dem herzustellenden Verschluss verwendeten Bereich über die Verformungstemperatur hinaus bis zum thermoplastischen Zustand erwärmt wird, dass in dem thermoplastischen Bereich der Hohlkammerplatte beide Aussenwände miteinander oder mit einem die Stirnseiten überdeckenden Band aus thermoplastischem Kunststoff gasdicht verschweisst werden, und dass der im thermoplastischen Zustand erzeugte Verschluss noch wenigstens 1 min auf einer Temperatur im Bereich von 10°C unter bis 20°C über der Vicat-Erweichungstemperatur des Kunststoffmaterials der Hohlkammerplatte gehalten wird.

2. Verfahren nach Anspruch 1, dadurch gekennzeichnet, dass die Hohlkammerplatte mit der Geschwindigkeit, mit der sie extrudiert wird, durch einen beheizten Tunnel bewegt wird.

3. Verfahren nach Anspruch 1, dadurch gekennzeichnet, dass die Hohlkammerplatte mit der Geschwindigkeit, mit der sie extrudiert wird, fortbewegt und dabei eine Heizvorrichtung im Bereich des Verschlusses mitgeführt wird.

4. Verfahren nach den Ansprüchen 1 bis 3, dadurch gekennzeichnet, dass die Aussenwände im Verschlussbereich im thermoplastischen Zustand unter Ausbildung einer zu den Aussenwänden parallelen Fläche gasdicht zusammengepresst werden.

5. Verfahren nach Anspruch 4, dadurch gekennzeichnet, dass die Aussenwände in der Weise zusammengepresst werden, dass innerhalb der Fläche eine tiefe Nut oder eine Trennstelle ausgebildet wird.

## Claims

1. Process for preparing a hollow chamber plate, sealed so as to be gastight, from extruded plastics, starting from an integrally extruded hollow profile plate, consisting of two substantially planar parallel outer walls and webs arranged therebetween, which contains a plurality of hollow chambers enclosed between the outer walls and the webs, by heating the hollow chamber plate to the deformation temperature, at least in certain areas, and sealing the hollow chambers in the heated portion, characterised in that the hollow chamber plate is heated, at least in the area used for the closure which is to be produced, beyond the deformation temperature to the thermoplastic state, in that, in the thermoplastic area of the hollow chamber plate, the two outer walls are welded to each other or to a strip of thermoplastic synthetic material which covers the end faces, so as to form a gastight seal, and in that the closure produced in the thermoplastic state is kept for at least one minute at a temperature in the range from 10°C below to 20°C above the Vicat softening temperature of the plastics material of the hollow chamber plate.

2. Process as claimed in claim 1, characterised in that the hollow chamber plate is moved through a heated tunnel at the speed at which it is extruded.

3. Process as claimed in claim 1, characterised in that the hollow chamber plate is moved along at the speed at which it is extruded and at the same time a heating apparatus is moved along with it in the region of the closure.

4. Process as claimed in claims 1 to 3, characterised in that the outer walls are pressed together to form a gastight seal in the region of the closure in the thermoplastic state to form a surface parallel to the outer walls.

5. Process as claimed in claim 4, characterised in that the outer walls are pressed together in such a way that a deep groove or a dividing line is formed within the surface.

**Revendications**

1. Procédé pour la fabrication d'une plaque de matière plastique extrudée à chambres creuses fermées de manière étanche aux gaz, à partir d'une plaque de profil creux extrudée d'une seule pièce, se composant de deux parois extérieures parallèles sensiblement planes et de nervures disposées entre celles-ci, plaque qui contient une multiplicité de chambres creuses délimitées entre les parois extérieures et les nervures, par réchauffement de la plaque à chambres creuses, au moins dans des régions partielles, à la température de déformation et fermeture des chambres creuses dans la région réchauffée, caractérisé en ce qu'au moins dans la région utilisée pour la fermeture à réaliser, la plaque à chambres creuses est réchauffée au-delà de la température de déformation jusqu'à l'état thermoplastique, en ce que, dans la région thermoplastique de la plaque à chambres creuses, les deux parois extérieures sont soudées de manière étanche aux gaz l'une avec l'autre ou avec une bande de matière thermoplastique qui recouvre les côtés frontaux, et en ce que la fermeture réalisée à l'état thermoplastique est maintenue, pendant au moins 1 mn encore, à une température se situant dans la gamme comprise entre 10°C au-dessous et 20°C au-dessus du point de ramollissement de Vicat de la matière plastique de la plaque à chambres creuses.

2. Procédé selon la revendication 1, caractérisé en ce que la plaque à chambres creuses est déplacée à travers un tunnel chauffé à la vitesse à laquelle elle est extrudée.

3. Procédé selon la revendication 1, caractérisé en ce que la plaque à chambres creuses avance à la vitesse à laquelle elle est extrudée et un dispositif chauffant est entraîné avec elle dans la région de la fermeture.

4. Procédé selon l'une quelconque des revendications 1 à 3, caractérisé en ce que les parois extérieures sont pressées l'une contre l'autre dans la région de fermeture à l'état thermoplastique, avec formation d'une surface parallèle aux parois extérieures.

5. Procédé selon la revendication 4, caractérisé en ce que les parois extérieures sont pressées l'une contre l'autre de telle manière qu'une rainure profonde ou une ligne de sectionnement soit formée en dedans de ladite surface.

FIG. 1

FIG. 2

FIG. 3

FIG. 4

FIG. 5

FIG. 6

FIG. 7

FIG. 8